# EUROPEAN PATENT APPLICATION

(11) **EP 3 530 701 A1**
(43) Date of publication of application: **28.08.2019**
(21) Application number: 17861706.4
(22) Date of filing: 13.10.2017
(51) Int. Cl.: C08L 81/02, B29C 67/00, B33Y 70/00, C08K 3/00, C08L 27/12

(54) **POLYARYLENE SULFIDE RESIN POWDER GRANULAR ARTICLE MIXTURE AND METHOD FOR PRODUCING THREE-DIMENSIONAL MOLDED ARTICLE**

(30) Priority: 21.10.2016 JP 2016206652
(71) Applicant: Toray Industries, Inc., Tokyo 103-8666 (JP)
(72) Inventor: WATANABE, Kei, Tokai-shi Aichi 476-8567 (JP); TAKEDA, Kazusada, Nagoya-shi Aichi 455-8502 (JP); MIYAMA, Hisashi, Tokyo 103-8666 (JP); NISHIDA, Mikiya, Tokyo 103-8666 (JP); SHIBATA, Hikaru, Tokai-shi Aichi 476-8567 (JP)
(74) Representative: Mewburn Ellis LLP
(86) International application number: PCT/JP2017/037157
(87) International publication number: WO 2018/074353

(57) **Abstract**

The present invention addresses the problem of obtaining a polyarylene sulfide resin powder granular article mixture for 3D printers, the mixture enabling production of a highly heat-resistant and high-ductility three-dimensional molded article. Provided is a polyarylene sulfide resin powder granular article mixture which is characterized by having: 5-25 parts by weight of fluorine resin powder granular article with respect to 100 parts by weight of polyarylene sulfide resin powder granular article; an average particle size of greater than 1 µm to 100 pm or less; an angle of repose of 43 degrees or less; and a homogeneity of 4 or less.

## Description

### Technical Field

The present invention relates to a polyarylene sulfide resin powder granular mixture suitable for producing a three-dimensional molded article by using a selective laser sintering (SLS) 3D printer and a method for producing the three-dimensional molded article using such polyarylene sulfide resin powder granular mixture.

### Background Art

Rapid prototyping (RP) is a group of known techniques used in fabricating three-dimensional object. In these techniques, the surface of a three-dimensional figure is represented as a data in the format of an assembly of triangles (STL, Standard Triangulated Language), and the three-dimensional object is fabricated by calculating the cross-sectional shape sliced in the direction of the lamination, and forming each layer according to the calculated shape. Known techniques for fabricating three-dimensional objects include fused deposition molding (FDM), UV curing ink jet method, stereo lithography (SL), selective laser sintering (SLS), and ink jet binding. Of these, selective laser sintering has the merits of suitability for precise shaping and non-necessity of the support member compared to other techniques since this selective laser sintering is a method wherein an article is fabricated by repeating the thin layer-formation step wherein the powder is formed into a thin layer and the cross-sectional shape-formation step wherein the thus formed thin layer is irradiated with a laser beam so that the part of the thin layer corresponding to the cross-sectional shape of the article to be formed is irradiated by the laser beam to bind the powder. For example, Patent Document 1 discloses production of an artificial bone model by using a powder prepared by mixing 30 to 90% by weight of a synthetic resin powder and 10 to 70% by weight of an inorganic filler. These are promising techniques for manufacturing articles having complicated shapes which had been difficult to produce by conventional molding techniques such as injection molding and extrusion molding.

### Prior Art Document

### Patent Document

Patent Document 1: Japanese Unexamined Patent Publication (Kokai) No. 2004-184606
Patent Document 2: Japanese Unexamined Patent Publication (Kokai) No. 7-62240
Patent Document 3: Japanese Unexamined Patent Publication (Kokai) No. 2005-14214

### Summary of the Invention

### Problems to Be Solved by the Invention

However, conventional powder materials that had been used for the SLS 3D printer were mainly thermoplastic resins such as polyamide 11 and polyamide 12 having a relatively low melting point, and use of such conventional powder materials for the preparation of the three-dimensional molded article prepared by a SLS 3D printer had been limited to the applications where strength and heat resistance were not required, for example, models and shape confirmation in the prototyping, and use for members in the practical use had been difficult. In order to solve the problems as described above, use of engineering plastics having excellent heat resistance, barrier properties, chemical resistance, electric insulation, and resistance to wet heat such as polyarylene sulfide (hereinafter also abbreviated as PAS) as represented by polyphenylene sulfide (hereinafter also abbreviated as PPS) for the three-dimensional shaping has been conducted. However, these materials could not be used in the applications such as test members where the resulting article is actually assembled requiring the toughness, and there is a demand for the development of a powder granular mixture that can be used with a SLS 3D printer for producing a three-dimensional molded article simultaneously exhibiting the heat resistance and the high toughness.

Patent Document 2 discloses a method for producing a PAS resin powder granules having a high melt viscosity. However, this PAS resin powder granules is inadequate for use in the SLS 3D printer due to the wide particle size distribution with high homogeneity.

Patent Document 3 discloses production of a PPS resin powder granules having a narrow particle size distribution by dissolving the PPS in a high temperature solvent followed by cooling for precipitation. However, a three-dimensional molded article having a high strength could not be produced due to the low melt viscosity of the PAS resin.

An object of the present invention is to provide a polyarylene sulfide resin powder granular mixture for a SLS 3D printer which can be used in producing a three-dimensional molded article simultaneously having heat resistance and high toughness.

### Means for Solving the Problems

The inventors of the present invention have made an intensive study to solve the problems as described above and arrived at the invention as described below.

Accordingly, the present invention is as described below.
(1) A polyarylene sulfide resin powder granular mixture containing 5 to 25 parts by weight of fluororesin powder granules in relation to 100 parts by weight of polyarylene sulfide resin powder granules, wherein the powder granular mixture has an average particle size in excess of 1 µm and 100 µm or less, an angle of repose of 43 degrees or less, a homogeneity of 4 or less.
(2) A polyarylene sulfide resin powder granular mixture according to (1) wherein the fluororesin constituting the fluororesin powder granule is at least one member selected from polytetrafluoroethylene (PTFE), polychlorotrifluoroethylene (PCTFE), polyvinylidene fluoride (PVDF), polyvinyl fluoride (PVF), perfluoroalkoxyfluororesin (PFA), tetrafluoroethylene-hexafluoro propylene copolymer (FEP), ethylene-tetrafluoroethylene copolymer (ETFE), and ethylene-chlorotrifluoroethylene copolymer (ECTFE).
(3) A polyarylene sulfide resin powder granular mixture according to (1) or (2) wherein the polyarylene sulfide resin powder granules have an average particle size in excess of 1 µm and 100 µm or less.
(4) A polyarylene sulfide resin powder granular mixture according to any one of (1) to (3) wherein the fluororesin powder granules have an average particle size of at least 100 nm and 1 µm or less.
(5) A polyarylene sulfide resin powder granular mixture according to any one of (1) to (4) further comprising at least 0.1 part by weight and 5 parts or less by weight of inorganic fine particles in relation to 100 parts by weight of the polyarylene sulfide resin powder granules.
(6) A polyarylene sulfide resin powder granular mixture according to (5) wherein the inorganic fine particles have an average particle size of at least 20 nm and 500 nm or less.
(7) A method for producing a three-dimensional molded article comprising the step of supplying the polyarylene sulfide resin powder granular mixture according to any one of (1) to (6) to a selective laser sintering (SLS) 3D printer.

### Advantageous Effects of the Invention

The present invention is capable of providing a polyarylene sulfide resin powder granular mixture for producing a three-dimensional molded article simultaneously having heat resistance and high toughness. Description of Preferred Embodiments

### [PAS resin]

PAS in the present invention is a homopolymer or a copolymer containing a repeating unit represented by the formula: -(Ar-S)- as its main constitutional unit, and more preferably, a homopolymer or a copolymer containing 80% by mole or more of such repeating unit. Ar is a group containing an aromatic ring wherein the site of bonding is present on the aromatic ring, and examples include the divalent constitutional repeating units including those represented by the following formula (A) to formula (L). Of these, the most preferred is the constitutional repeating unit represented by the formula (A) . 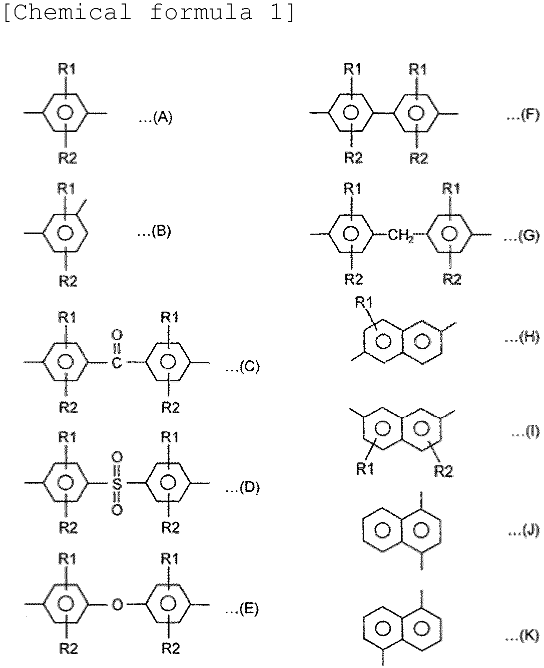 (wherein R1 and R2 are respectively a substituent selected from hydrogen, alkyl group containing 1 to 6 carbon atoms, alkoxy group containing 1 to 6 carbon atoms, and halogen group.)

The PAS of the present invention may also be any one of a random copolymer and a block copolymer containing such constitutional repeating unit and a mixture thereof.

Typical examples of such PAS include polyphenylene sulfide, polyphenylene sulfide sulfone, polyphenylene sulfide ketone, random copolymers and block copolymers thereof, and mixtures thereof. Examples of the most preferable PAS include polyphenylene sulfide, polyphenylene sulfide sulfone, and polyphenylene sulfide ketone containing at least 80% by mole and more preferably at least 90% by mole of p-phenylene sulfide unit as the main constitutional unit of the polymer.

The PAS of the present invention can be produced by various methods such as the method for producing a polymer having a relatively low molecular weight described in Japanese Examined Patent Publication (Kokoku) No. 45-3368 or the method for producing a polymer having a relatively high molecular weight described in Japanese Examined Patent Publication (Kokoku) No. 52-12240 or Japanese Unexamined Patent Publication (Kokai) No. 61-7332. In the present invention, the thus produced PPS resin may be used after various treatments such as crosslinking/molecular weight-increasing treatment by heating in air, heat treatment in an inert gas atmosphere such as nitrogen atmosphere or at a reduce pressure, washing with an organic solvent, hot water, or acid aqueous solution, or activation by an acid anhydride, amine, isocyanate, or a functional group-containing compound such as functional group-disulfide compound.

The PAS resin particles used in the present invention is not particularly limited, and the PAS resin particles may be those prepared from the polymer produced by the methods as described above or the PAS resin particles prepared from the PAS resin that had been formed into pellets, fibers, or films. The PAS resin particles as used herein includes the PAS resin particles having the particle size in the range suitable for the present invention and the PAS resin particles having a particle size larger than the range of the particle size suitable for the present invention. The PAS resin particles may be optionally pulverized depending on the morphology of the PAS resin particles used. In addition, the PAS resin particles may be those prepared by spray drying wherein the starting material is dissolved in a solvent and then subjected to spray drying, precipitation from a poor solvent wherein an emulsion is formed in a solvent and then contacted with a poor solvent, drying-in-liquid method wherein an emulsion is formed in a solvent and then the organic solvent is removed by drying, or compulsory melt kneading method wherein the resin component to be formed into the particles and the resin component which is different from such component are mechanically kneaded to form a sea-island structure and the sea component is then removed by a solvent.

The melt viscosity of the PAS used in the present invention is preferably at least 150 Pa·s and 500 Pa·s or less. When the melt viscosity is less than 150 Pa·s, the resulting three-dimensional molded article will suffer from insufficient strength. When the melt viscosity is in excess of 500 Pa·s, strength in the height direction will be significantly low due to the weakened interlayer adhesion since the molten resin will not penetrate into the underlying layer when the PAS resin is melted by the laser beam irradiation. The melt viscosity is the value measured by CAPILOGRAPH 1C manufactured by TOYO SEIKI CO., LTD. using a die having a nozzle length of 10.00 mm and a nozzle diameter of 0.50 mm. About 20 g of the sample is injected in a cylinder set at 300°C, and the melt viscosity is measured at a shear velocity of 1216 sec⁻¹ after retaining the temperature for 5 minutes. The lower limit of the melt viscosity is preferably 150 Pa·s, more preferably 160 Pa·s, still more preferably 170 Pa·s, and most preferably 180 Pa·s. The upper limit of the melt viscosity is preferably 500 Pa·s, more preferably 450 Pa·s, still more preferably 400 Pa·s, and most preferably 350 Pa·s.

Exemplary methods of adjusting the melt viscosity of the PAS to the desired range include a method wherein the ratio of the sulfidating agent and the dihalogenated aromatic compound is adjusted in the polymerization, a method wherein a polymerization aid and/or a polyhalogenated aromatic compound is added in addition to the sulfidating agent and the dehalogenated aromatic compound, and a method wherein the PAS is heated in oxygen atmosphere for oxidative crosslinking.

In addition, the recrystallization temperature of the PAS used in the present invention is preferably at least 150°C and 210°C or less. When the recrystallization temperature of the PAS is less than 150°C, solidification after the laser beam irradiation will be significantly slow, and even powder surface will not be formed when the powder layer is disposed on the top of the molten resin. When the recrystallization temperature of the PAS is 210°C or higher, shrinkage and warpage will occur in the crystallization of the PAS resin that had been melted in the laser beam irradiation. In the selective laser sintering, when the molten resin becomes warped and the powder layer is deposited on the top of such molten resin, the powder layer will be dragged by the warped molten resin and the three-dimensional molded article having the desired shape will not be produced. The recrystallization temperature as used herein is the peak temperature of the exothermic peak upon crystallization when the temperature of the PAS resin powder granules is raised from 50°C to 340°C at 20°C/min, retained at 340°C for 5 minutes, and descended from 340°C to 50°C at 20°C/min in nitrogen atmosphere by using a differential scanning calorimeter. The lower limit of the recrystallization temperature is preferably 150°C, more preferably 153°C, still more preferably 155°C, and most preferably 160°C. The upper limit of the recrystallization temperature is preferably 210°C, more preferably 205°C, still more preferably 200°C, and most preferably 195°C.

Adjustment of the PAS recrystallization temperature is typically accomplished by adding a metal salt of an organic acid or a metal salt of an inorganic acid to the as-polymerized PAS resin and washing the PAS resin. Such washing is preferably conducted after washing residual oligomer and residual salt with warm or hot water. Nonlimiting examples of the metal salt of an organic acid or the metal salt of an inorganic acid include calcium acetate, magnesium acetate, sodium acetate, potassium acetate, calcium propionate, magnesium propionate, sodium propionate, potassium propionate, calcium hydrochloride, magnesium hydrochloride, sodium hydrochloride, and potassium hydrochloride. Amount of such metal salt of an organic acid or such metal salt of an inorganic acid added is preferably 0.01 to 5% by weight in relation to the PAS. In the washing of the PAS, use of an aqueous solution of such metal salt of an organic acid or such metal salt of an inorganic acid is preferable, and the washing is preferably conducted at a temperature of at least 50°C and 90°C or less. With regard to the ratio of the PAS and the aqueous solution, typical ratio is 10 to 500 g of the PAS in relation to 1 liter of the aqueous solution.

### [PAS resin powder granules]

The PAS resin powder granules used in the present invention has an average particle size in excess of 1 µm and 100 µm or less. The average particle size of the PAS resin powder granules is preferably in excess of 1 µm and 100 µm or less.

The lower limit of the average particle size of the PAS resin powder granules is preferably 3 µm, more preferably 5 µm, still more preferably 8 µm, still more preferably 10 µm, still more preferably 13 µm, and most preferably 15 µm. The upper limit of the average particle size is preferably 95 µm, more preferably 90 µm, still more preferably 85 µm, still more preferably 80 µm, still more preferably 75 µm, and most preferably 70 µm. When the average particle size of the PAS resin powder granules is in excess of 100 µm, even powder surface will not be formed in the powder lamination in the SLS 3D printer. On the other hand, when the average particle size of the PAS resin powder granules is less than 1 µm, the powder granules will be aggregated, and formation of the even powder surface will be difficult.

In addition, the PAS resin powder granules preferably has a homogeneous particle size distribution. The homogeneity of the PAS resin powder granules is preferably 4.0 or less, more preferably 3.5 or less, still more preferably 3.0 or less, still more preferably 2.5 or less, and most preferably 2.0 or less. While theoretical lower limit of the homogeneity is 1, practically, the lower limit is preferably at least 1.1, more preferably at least 1.2, still more preferably at least 1.3, still more preferably at least 1.4, and most preferably at least 1.5. When the homogeneity of the PAS resin powder granules is in excess of 4, formation of the even powder surface in the powder lamination by the 3D printer will be difficult even if the average particle size was within the suitable range, and the intended merit of the present invention will not be realized.

The average particle size of the PAS resin powder granules in the present invention is the particle size (d50) when the cumulative frequency from the smaller side of the particle size becomes 50% in the particle size distribution measured by a laser diffraction particle size distribution analyzer based on the scattering and diffraction theory of Fraunhofer. The homogeneity of the PAS resin powder granules of the present invention is the value obtained by dividing the particle size (d60) when the cumulative frequency from the smaller side of the particle size becomes 60% in the particle size distribution measured by the method as described above with the particle size (d10) when the cumulative frequency from the smaller side of the particle size becomes 10% in the particle size distribution.

### [Production method of the PAS resin powder granules]

In the present invention, the powder granules adapted for use in the present invention can be produced by using a PAS resin particles having a large average particle size or a PAS resin particles having a high homogeneity (i.e. not homogeneous), by spray drying wherein the starting material is pulverized and dissolved in a solvent and then subjected to spray drying, precipitation from a poor solvent wherein an emulsion is formed in a solvent and then contacted with a poor solvent, drying-in-liquid method wherein an emulsion is formed in a solvent and then the organic solvent is removed by drying, or compulsory melt kneading method wherein the resin component to be formed into the particles and the resin component which is different from such component are mechanically kneaded to form a sea-island structure and the sea component is then removed by a solvent.

In view of economy, the preferred is use of pulverization while the method used for the pulverization is not particularly limited. Exemplary pulverization methods include those using a jet mill, beads mill, hammer mill, ball mill, sand mill, or turbo mill, and frozen grinding. Of these, the preferred are use of dry pulverization by a turbo mill or jet mill and frozen grinding, and the more preferred are use of frozen grinding.

### [Fluororesin]

In the present invention, fluororesin powder granules are added for the purpose of improving the toughness of the three-dimensional molded article prepared by using the polyarylene sulfide resin powder granular mixture. While the toughness of the three-dimensional molded article produced by using the PAS resin powder granular mixture is damaged by the aggregation through interaction with adjacent particles when the fluororesin powder granules have a smaller particle size, toughness of the three-dimensional molded article produced by using the PAS resin powder granular mixture can be improved by adding fluororesin powder granules having a particle size smaller than the granules and promoting homogeneous dispersion.

The fluororesin constituting the fluororesin powder granules added is preferably at least one member selected from polytetrafluoroethylene (PTFE), polychlorotrifluoroethylene (PCTFE), polyvinylidene fluoride (PVDF), polyvinyl fluoride (PVF), perfluoroalkoxyfluoro resin (PFA), tetrafluoroethylene-hexafluoro propylene copolymer (FEP), ethylene-tetrafluoroethylene copolymer (ETFE), and ethylene-chlorotrifluoroethylene copolymer (ECTFE). The fluororesin is most preferably PTFE having a high chemical resistance.

These fluororesin may be used alone or in combination of two or more.

### [Fluororesin powder granules]

The fluororesin powder granules added to the PAS resin powder granular mixture in the present invention are preferably those having an average particle size of at least 100 nm and 1 µm or less. The average particle size as used herein is the value measured by the same method as the average particle size of the PAS resin powder granules as described above.

The upper limit of the average particle size of the fluororesin powder granules is preferably 1 µm, more preferably 900 nm, still more preferably 800 nm, still more preferably 700 nm, and most preferably 600 nm. The lower limit is preferably 100 nm, more preferably 200 nm, still more preferably 300 nm, and most preferably 400 nm. When the average particle size of the fluororesin is 1 µm or less, the fluororesin will be uniformly dispersed in the PAS resin powder granules. When the average particle size of the fluororesin powder granules is at least 100 nm, dispersion without aggregation will be enabled.

The fluororesin powder granules may preferably have a homogeneous particle size distribution. The homogeneity of the fluororesin powder granules is preferably 3.0 or less, more preferably 2.5 or less, still more preferably 2.0 or less, and still more preferably 1.8 or less. While theoretical lower limit of the homogeneity is 1, practically, the lower limit is preferably at least 1.1, more preferably at least 1.2, still more preferably at least 1.3, still more preferably 1.4, and most preferably at least 1.5. When the homogeneity of the fluororesin powder granules is 3 or less, homogeneous distribution in the PAS resin powder granules will be enabled.

Amount of the fluororesin powder granules incorporated is at least 5 parts by weight and 25 parts or less by weight in relation to 100 parts by weight of the PAS resin powder granules. The upper limit is preferably 25 parts by weight, more preferably 20 parts by weight, still more preferably 15 parts by weight, still more preferably 12 parts by weight, and most preferably 10 parts by weight. The lower limit is preferably 5 parts by weight, more preferably 6 parts by weight, and still more preferably 7 parts by weight. When the amount of the fluororesin powder granules added is 25 parts or less by weight, the fluororesin powder granules will be uniformly dispersed in the PAS resin powder granules. When the amount of the fluororesin powder granules added is at least 5 parts by weight, the effect of improving the toughness of the three-dimensional molded article by the use of the PAS resin powder granular mixture will be achieved.

### [Inorganic fine particles]

In the present invention, inorganic fine particles may be added to improve flowability of the polyarylene sulfide resin powder granular mixture. While the flowability of the PAS resin powder granular mixture is damaged by the interaction with adjacent particles when the powder granular mixture has a smaller particle size, the flowability of the powder granular mixture can be improved by adding inorganic fine particles having a particle size smaller than the PAS resin powder granules to thereby increase the distance between the particles. Such polyarylene sulfide resin powder granular mixture is suitable for use in producing the three-dimensional molded article.

The inorganic fine particles added to the PAS resin powder granular mixture in the present invention is preferably the one having an average particle size of at least 20 nm and 500 nm or less. The average particle size as used herein is the value measured by the same method as the average particle size of the PAS resin powder granules as described above.

The upper limit of the average particle size of the inorganic fine particles is preferably 500 nm, more preferably 400 nm, still more preferably 300 nm, still more preferably 250 nm, and most preferably 200 nm. The lower limit is preferably 20 nm, more preferably 30 nm, still more preferably 40 nm, and most preferably 50 nm. When the average particle size of the inorganic fine particles is 500 nm or less, the inorganic fine particles will be uniformly dispersed in the PAS resin powder granules. When the average particle size of the inorganic fine particles is at least 20 nm, the effect of improving the flowability of the PAS resin powder granular mixture will be achieved.

The inorganic fine particles added may be any of those having the average particle size as described above, and preferable examples include calcium carbonate powders such as light calcium carbonate, heavy calcium carbonate, pulverized calcium carbonate, and special calcium fillers; clay (aluminum silicate powder) such as calcined clay such as nepheline syenite fine powder, montmorillonite, and bentonite and silane-modified clay; talc; silica (silicon dioxide) powders such as molten silica, crystalline silica, and amorphous silica; silicic acid-containing compounds such as diatomaceous earth and glass sand; pulverized natural minerals such as pumice powder, pumice balloon, slate powder, and mica powder; alumina-containing compounds such as alumina (aluminum oxide), alumina colloid (alumina sol), alumina white, and aluminum sulfate; minerals such as barium sulfate, lithopone, sulfuric acid calcium, molybdenum disulfide, and graphite; glass fillers such as glass fiber, glass beads, glass flakes, and foamed glass beads; and fly ash sphere, volcanic glass balloon, synthetic inorganic balloon, monocrystalline potassium titanate, carbon fiber, carbon nanotube, carbon balloon, carbon 64 fullerene, anthracite powder, artificial cryolite, titanium oxide, magnesium oxide, basic magnesium carbonate, dolomite, potassium titanate, calcium sulfite, mica, asbestos, calcium silicate, aluminum powder, molybdenum sulfide, boron fiber , and silicon carbide fiber; and the more preferred are calcium carbonate powder, silica powder, alumina-containing compounds, and glass-based fillers. The particularly preferred is silica powder, and of such silica powder, the most preferred in industrial point of view is amorphous silica powder having a reduced toxicity to human.

The shape of the inorganic fine particles of the present invention is not particularly limited, and exemplary shapes include, spheres, porous particles, hollow particles, and amorphous particles. In view of the good flowability, the most preferred are spherical particles.

In this case, the term "spherical" includes not only true spheres but also spheroids. It is to be noted that the shape of the inorganic fine particles is evaluated by the circularity when the particle is projected in two-dimensions. The circularity is (perimeter of the circle having the same area as the projected particle image)/(perimeter of the projected particle). The average circularity of the inorganic fine particles is preferably at least 0.7 and 1 or less, more preferably at least 0.8 and 1 or less, and still more preferably at least 0.9 and 1 or less.

The inorganic fine particles are preferably silica powder. Silica powder is categorized by the production method into pyrogenic silica (namely, fumed silica) produced by burning a silane compound, deflagration silica produced by explosively burning metal silicon powder, wet silica produced by neutralization of sodium silicate with a mineral acid (of these, those produced by synthesis in basic conditions followed by aggregation are called precipitated silica, and those produced by synthesis in acidic conditions followed by aggregation are called gelation silica), colloidal silica (silica sol) produced by removing sodium from sodium silicate with an ion-exchange resin and polymerizing the resulting acidic silicic acid in basic conditions, and sol-gel method silica produced by hydrolysis of the silane compound. In view of realizing the merits of the present invention, the preferred are the sol-gel method silica.

Of the inorganic fine particles, the preferred is silica, and the more preferred is the silica produced by sol-gel method and/or spherical silica, and particularly, the spherical silica produced by sol-gel method.

More preferred are the silane compound and the silazane compound having a hydrophobicized surface. The hydrophobicization treatment of the surface suppresses aggregation of the inorganic fine particles and the dispersion of the inorganic fine particles in the PAS resin powder granules is thereby improved. Exemplary such silane compounds include unsubstituted or halogen-substituted trialkoxysilanes such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, butyltrimethoxysilane, butyltriethoxysilane, hexyltrimethoxysilane, trifluoropropyltrimethoxysilane, and heptadecafluorodecyltrimethoxysilane, and the preferred are methyltrimethoxysilane, methyltriethoxysilane, ethyltrimethoxysilane, and ethyltriethoxysilane, and the more preferred are methyltrimethoxysilane and methyltriethoxysilane, or partially hydrolyzed condensation products thereof. Exemplary such silazane compounds include hexamethyldisilazane, and hexaethyldisilazane and the preferred is hexamethyldisilazane. Exemplary monofunctional silane compounds include monosilanol compounds such as trimethylsilanol and triethylsilanol; monochlorosilanes such as trimethylchlorosilane and triethylchlorosilane; monoalkoxysilanes such as trimethylmethoxysilane and trimethylethoxy silane; monoacyloxysilanes such as trimethylsilyldimethylamine and trimethylsilyldiethylamine; and trimethylacetoxysilane, and the preferred is trimethylsilanol, trimethylmethoxysilane, or trimethylsilyldiethylamine, and the most preferred is trimethylsilanol or trimethylmethoxysilane.

These inorganic fine particles may be used alone or in combination of two or more.

Amount of the inorganic fine particles incorporated is preferably at least 0.1 part by weight and 5 parts or less by weight in relation to 100 parts by weight of the PAS resin powder granules. The upper limit of the amount incorporated is preferably 5 parts by weight, more preferably 4 parts by weight, and still more preferably 3 parts by weight. The lower limit of the amount incorporated preferably 0.2 parts by weight, more preferably 0.3 parts by weight, and still more preferably 0.4 parts by weight.

### [PAS resin powder granular mixture]

In the present invention, the PAS resin powder granular mixture is produced as described above by mixing the PAS resin powder granules, the fluororesin powder granules, and preferably, the inorganic fine particles. The resulting PAS resin powder granular mixture has the properties as described below.

The PAS resin powder granular mixture has an average particle size in excess of 1 µm and 100 µm or less.

The lower limit of the average particle size of the PAS resin powder granular mixture is preferably 3 µm, more preferably 5 µm, still more preferably 8 µm, still more preferably 10 µm, still more preferably 13 µm, and most preferably 15 µm. The upper limit of the average particle size is preferably 95 µm, more preferably 90 µm, still more preferably 85 µm, still more preferably 80 µm, still more preferably 75 µm, and most preferably 70 µm. When the average particle size of the PAS resin powder granular mixture is in excess of 100 µm, an even powder surface will not be formed during the powder lamination in the SLS 3D printer. On the other hand, when the average particle size of the PAS resin powder granular mixture is less than 1 µm, the powder granular mixture will be aggregated, and formation of the even powder surface will be difficult.

In addition, the PAS resin powder granular mixture preferably has a homogeneous particle size distribution. The homogeneity of the PAS resin powder granules is 4 or less, preferably 4.0 or less, more preferably 3.5 or less, still more preferably 3.0 or less, still more preferably 2.5 or less, and most preferably 2.2 or less. While theoretical lower limit of the homogeneity is 1, practically, the lower limit is preferably at least 1.1, more preferably at least 1.2, still more preferably at least 1.3, still more preferably at least 1.4, and most preferably at least 1.5. When the homogeneity of the PAS resin powder granules is in excess of 4, formation of the even powder surface in the powder lamination by the 3D printer will be difficult even if the average particle size was within the suitable range, and the intended merit of the present invention will not be realized.

The PAS resin powder granular mixture has excellent powder flowability as its characteristic feature. More specifically, the angle of repose is 43 degrees or less, and 42 degrees or less in the preferable embodiment of the invention, and 40 degrees or less in the more preferable embodiment of the invention. The lower limit of the angle of repose is typically at least 20 degrees.

The angle of repose as used in the present invention is the value measured according to measurement method of Carr's flowability index.

Such powder granular mixture exhibits high flowability, and since consolidation by the pressure applied to the powder is less likely to occur, it is free from troubles such as clogging during the feeding and discharge to and from a silo or clogging in the pneumatic conveying.

Exemplary methods of mixing that can be used in producing the powder granular mixture include mixing by shaking, mixing associated with pulverization by ball mill or coffee mill, mixing by agitation blades such as Nauta mixer and Henschel mixer, mixing by rotating the vessel such as V-type mixer, liquid-phase mixing in a solvent followed by drying, mixing by stirring with a gas stream by using a flash blender or the like, and mixing by spraying a powder granules and/or a slurry by using an atomizer or the like.

### [Application of PAS resin powder granular mixture]

The PAS resin powder granular mixture of the present invention is useful for the production of a three-dimensional molded article by selective laser sintering.

The production of the molded article by additive layer manufacturing by selective laser sintering may be accomplished by repeating the steps of thin layer formation step wherein the PAS resin powder granular mixture is formed into a thin layer and the step of cross-section formation wherein a laser beam is irradiated to the thus formed thin layer so that the PAS resin powder granular mixture in the part of the thin layer corresponding to the cross-sectional shape of the article to be formed is irradiated and sintered to thereby produce the article by additive layer manufacturing by selective laser sintering.

The three-dimensional molded article obtained by selective laser sintering using the PAS resin powder granular mixture of the present invention is prepared by using the PAS resin powder granules which is a powder material having a high heat resistance, chemical resistance, and size stability as well as an adequate melt viscosity, and accordingly, it has excellent mechanical strength. In addition, since the PAS resin powder granular mixture contains fluororesin powder granules, the resulting three-dimensional molded article will be the one having an excellent toughness. Furthermore, since the PAS resin powder granular mixture preferably contains inorganic fine particles, it has excellent flowability and formation of the even powder surface is enabled. In addition, the PAS resin powder granular mixture of the present invention has a small average particle size with low homogeneity, and accordingly, production of a molded article having excellent shape with reduced defects will be enabled when a three-dimensional molded article is fabricated by the selective laser sintering.

### Examples

Next, the method of the present invention is described in detail by referring to Examples and Comparative Examples, which by no means limit the scope of the present invention. The procedures used in the measurements were as described below.

### [Average particle size of the PAS resin powder granules, fluororesin powder granules, and powder granular mixture]

The average particle size of the PAS resin powder granules was determined by using spray particle size distribution measurement system Aerotrac model 3500A manufactured by MicrotracBEL. More specifically, the average particle size of the PAS resin powder granules was determined by irradiating the dispersed analyte with the laser beam, detecting the diffracted scattered light, analyzing the light according to the diffraction theory of Fraunhofer, calculating and analyzing the particle size distribution on volume basis, depicting a cumulative curve by assuming that the total volume of the fine particles obtained by the analysis was 100%, and using the particle size (median diameter, d50) at the point when the cumulative frequency reached 50% for the average particle size of the PAS resin powder granules.

### [Average particle size of the inorganic fine particles]

The average particle size of the inorganic fine particles was determined by randomly choosing 100 particles from the picture taken by an electronic microscope at a magnification of 100,000 and measuring the maximum particle size for the particle size. The number average was used for the average particle size.

### [Homogeneity of the PAS resin powder granules, fluororesin powder granules, and powder granular mixture]

The homogeneity of the PAS resin powder granules was measured by determining particle size distribution using spray particle size distribution measurement system Aerotrac model 3500A manufactured by MicrotracBEL and using the value of d60/d10 of the particle size distribution for the homogeneity of the PAS resin powder granules. The homogeneity is higher when the PAS resin powder granules have broader particle size distribution.

### [Angle of repose of the powder granular mixture]

The angle of repose of the PAS resin powder granules was measured by Multi Tester MT-1 manufactured by SEISHIN ENTERPRISE Co., Ltd.

### [Melt viscosity]

The melt viscosity of the PAS resin constituting the PAS resin powder granules was measured by CAPILOGRAPH 1C manufactured by TOYO SEIKI CO., LTD. using a die having a nozzle length of 10.00 mm and a nozzle diameter of 0.50 mm. About 20 g of the sample was injected in a cylinder set at 300°C, and the melt viscosity was measured at a shear velocity of 1216 sec⁻¹ after retaining the temperature for 5 minutes.

### [Recrystallization temperature]

The recrystallization temperature of the PAS resin constituting the PAS resin powder granules was measured for about 10 mg of the powder granules by using DSC7 manufactured by PerkinElmer in nitrogen atmosphere under the measurement conditions as described below.
- Retained for 1 minute at 50°C
- Temperature elevation from 50°C to 340°C at a temperature elevation rate of 20°C/min
- Retained for 5 minutes at 340°C
- Temperature decrease from 340°C to 50°C at a temperature descending rate of 20°C/min

Temperature at the top of the exothermic peak associated with crystallization by temperature decrease was used for the recrystallization temperature.

### [Flexural modulus]

The flexural modulus of the three-dimensional molded article prepared by using the PAS resin powder granular mixture was determined by preparing an ISO 1A test piece by using a SLS 3D printer and conducting the measurement by using a universal testing machine (Tensilon Universal testing machine RTG-1250 manufactured by A&D). The measurement was conducted according to ISO-178, and the average of 4 measurements was used for the flexural modulus.

### [Heat resistance of the molded article]

The heat resistance of the three-dimensional molded article prepared by using PAS resin powder granular mixture was measured by preparing an ISO 1A test piece by using a SLS 3D printer, and determining weight loss percentage of the cut test pieces by using TGA (STA6000 manufactured by PerkinElmer). More specifically, temperature at the weight loss of 5% by weight was measured.
- Retained for 1 minutes at 50°C
- Temperature elevation from 50°C to 1000°C at a temperature elevation rate of 50°C/min

### [Production Example 1]

1.00 mole of 47% by weight sodium hydrosulfide, 1.05 mole of 46% by weight sodium hydroxide, 1.65 mole of N-methyl-2-pyrrolidone (NMP), 0.45 mole of sodium acetate, and 5.55 mole of ion exchanged water were charged in a 1 liter autoclave equipped with an agitator, and the mixture was gradually heated to 225°C for about 2 hours at normal pressure with nitrogen stream to distill 11.70 mole of water and 0.02 mole of NMP, and the reaction vessel was cooled to 160°C. Amount of the hydrogen sulfide dispersed was 0.01 mole.

Next, 1.02 mole of p-dichlorobenzene (p-DCB) and 1.32 mole of NMP were added, and the reaction vessel was sealed with nitrogen gas. Temperature of the mixture was then elevated in 2 steps from 200°C to 240°C in 90 minutes and from 240°C to 270°C in 30 minutes with stirring at 400 rpm. At 10 minutes after reaching 270°C, 0.75 mole of water was injected in 15 minutes in the reaction system. After 120 minutes at 270°C, the temperature was cooled to 200°C at a rate of 1.0°C/minute and the mixture was quenched to a temperature near the room temperature. The content was then collected from the reaction vessel.

After collecting the content and diluting with 0.5 liters of NMP, the solvent and the solid content were separated by filtration by using a sieve (80 mesh), and after washing the thus obtained particles with 1 liter of warm water several times, washing was conducted by adding 800 g of calcium acetate monohydrate (0.45% by weight in relation to PAS), and then, by using 1 liter of warm water. Filtration was then conducted to obtain a cake.

The resulting cake was dried in nitrogen stream at 120°C to obtain PAS-1. The resulting PAS-1 had an average particle size of 1600 µm, a homogeneity of 4.1, a melt viscosity of 210 Pa·s, and a recrystallization temperature of 168°C.

### [Example 1]

PAS-1 was pulverized in a jet mill (100AFG manufactured by Hosokawa Micron Corporation) for 120 minutes to produce a PAS resin powder granules having an average particle size of 50 µm and a homogeneity of 1.6. To this powder granules, 7 parts by weight of a fluororesin (PTFE) powder granules having an average particle size of 500 nm and an homogeneity of 1.5 was added, and then, 1 part by weight of inorganic fine particles (spherical silica produced by sol-gel method; X-24-9600A manufactured by Shin-Etsu Chemical Co., Ltd. having an average particle size of 170 nm) was added to obtain a PAS resin powder granular mixture having an average particle size of 50 µm, a homogeneity of 1.9, and an angle of repose of 39 degrees. By using the resin powder granular mixture,
a three-dimensional molded article was prepared by using a SLS 3D printer (Rafael 300 manufactured by ASPECT Inc.). No powder surface irregularity in the powder lamination occurred and good three-dimensional molded article was obtained. The three-dimensional molded article had a flexural modulus of 530 MPa and the temperature at the weight loss of 5% by weight was 510°C.

### [Example 2]

The procedure of Example 1 was repeated except that the amount of the fluororesin (PTFE) powder granules added was 5 parts by weight to obtain the PAS resin powder granular mixture. The PAS resin powder granular mixture had an average particle size of 50 µm, a homogeneity of 1.7, and an angle of repose of 38 degrees. By using the resin powder granular mixture, a three-dimensional molded article was prepared by using a SLS 3D printer (Rafael 300 manufactured by ASPECT Inc.). No powder surface irregularity in the powder lamination occurred and good three-dimensional molded article was obtained. The three-dimensional molded article had a flexural modulus of 1110 MPa and the temperature at the weight loss of 5% by weight was 490°C.

### [Example 3]

The procedure of Example 1 was repeated except that the amount of the fluororesin (PTFE) powder granules added was 9 parts by weight to obtain the PAS resin powder granular mixture. The PAS resin powder granular mixture had an average particle size of 46 µm, a homogeneity of 3.1, and an angle of repose of 40 degrees. By using the resin powder granular mixture, a three-dimensional molded article was prepared by using a SLS 3D printer (Rafael 300 manufactured by ASPECT Inc.). No powder surface irregularity in the powder lamination occurred and good three-dimensional molded article was obtained. The three-dimensional molded article had a flexural modulus of 400 MPa and the temperature at the weight loss of 5% by weight was 530°C.

### [Example 4]

The procedure of Example 1 was repeated except that the fluororesin (PTFE) powder granules had an average particle size of 12 µm and a homogeneity of 1.7 to obtain the PAS resin powder granular mixture. The PAS resin powder granular mixture had an average particle size of 48 µm, a homogeneity of 1.7, and an angle of repose of 37 degrees. By using the resin powder granular mixture, a three-dimensional molded article was prepared by using a SLS 3D printer (Rafael 300 manufactured by ASPECT Inc.). No powder surface irregularity in the powder lamination occurred and good three-dimensional molded article was obtained. The three-dimensional molded article had a flexural modulus of 980 MPa and the temperature at the weight loss of 5% by weight was 510°C.

### [Example 5]

The procedure of Example 4 was repeated except that the amount of the fluororesin (PTFE) powder granules added was 20 parts by weight to obtain the PAS resin powder granular mixture. The PAS resin powder granular mixture had an average particle size of 34 µm, a homogeneity of 1.7, and an angle of repose of 38 degrees. By using the resin powder granular mixture, a three-dimensional molded article was prepared by using a SLS 3D printer (Rafael 300 manufactured by ASPECT Inc.). No powder surface irregularity in the powder lamination occurred and good three-dimensional molded article was obtained. The three-dimensional molded article had a flexural modulus of 550 MPa and the temperature at the weight loss of 5% by weight was 550°C.

### [Comparative Example 1]

The procedure of Example 1 was repeated except that a fluororesin was added. The PAS resin powder granular mixture had an average particle size of 50 µm, a homogeneity of 1.6, and an angle of repose of 34 degrees. By using the resin powder granular mixture, a three-dimensional molded article was prepared by using a SLS 3D printer (Rafael 300 manufactured by ASPECT Inc.). No powder surface irregularity in the powder lamination occurred and good three-dimensional molded article was obtained. The three-dimensional molded article had a flexural modulus of 3090 MPa, and the hard molded article was insufficient in the toughness. The temperature at the weight loss of the three-dimensional molded article of 5% by weight was 460°C.

### [Comparative Example 2]

The procedure of Example 1 was repeated except that the amount of the fluororesin (PTFE) powder granules added was 35 parts by weight to obtain the PAS resin powder granular mixture. The PAS resin powder granular mixture had an average particle size of 43 µm, a homogeneity of 13, and an angle of repose of 44 degrees. Although preparation of a three-dimensional molded article was attempted by using this resin powder granular mixture by using a SLS 3D printer (Rafael 300 manufactured by ASPECT Inc.), the three-dimensional molded article could not be produced due to the powder surface irregularity in the powder lamination.

**[Table 1]**

| | PAS resin powder granules | Fluororesin | | | Inorganic fine particles | | PAS resin powder granular mixture | | | Properties of the three-dimensional molded article | | |
|---|---|---|---|---|---|---|---|---|---|---|---|---|
| | Amount added | Type | Amount added | Average particle size | Average particle size | Amount added | Average particle size | Homogeneity | Angle of repose | Flexural modulus | Temperature at the weight loss of 5% by weight | Appearance |
| | (pbw) | | (pbw) | (nm) | (nm) | (pbw) | (µm) | | (°) | (MPa) | (°C) | |
| Example 1 | 100 | PTFE | 7 | 500 | 170 | 1 | 50 | 1.9 | 39 | 530 | 510 | Pass |
| Example 2 | 100 | PTFE | 5 | 500 | 170 | 1 | 50 | 1.7 | 38 | 1110 | 490 | Pass |
| Example 3 | 100 | PTFE | 9 | 500 | 170 | 1 | 46 | 3.1 | 40 | 400 | 530 | Pass |
| Example 4 | 100 | PTFE | 7 | 12000 | 170 | 1 | 48 | 1.7 | 37 | 980 | 510 | Pass |
| Example 5 | 100 | PTFE | 20 | 12000 | 170 | 1 | 34 | 1.7 | 38 | 550 | 550 | Pass |
| Comparative Example 1 | 100 | - | - | - | 170 | 1 | 50 | 1.6 | 34 | 3090 | 460 | Pass |
| Comparative Example 2 | 100 | PTFE | 35 | 500 | 170 | 1 | 43 | 13 | 44 | - | - | Fail |

| | | | | | | | | | | | | |
|---|---|---|---|---|---|---|---|---|---|---|---|---|
| Pass: no surface irregularity and very good appearance. Fail: three-dimensional molded article could not be produced due to the surface irregularity. | | | | | | | | | | | | |

### Industrial Applicability

The PAS resin powder granular mixture of the present invention has fine particle size as well as homogeneous particle size distribution, and accordingly, a smooth powder surface will be formed when used in the SLS 3D printer. In addition, since the fluororesin powder granules in the PAS resin powder granular mixture of the present invention has an adequate average particle size and homogeneity, the fluororesin will be homogeneously distributed in the production of the three-dimensional molded article and the resulting three-dimensional molded article will have a low flexural modulus. Accordingly, a three-dimensional molded article having excellent heat resistance and high toughness can be produced by the selective laser sintering using the PAS resin powder granular mixture of the present invention.

## Claims

1. A polyarylene sulfide resin powder granular mixture containing 5 to 25 parts by weight of fluororesin powder granules in relation to 100 parts by weight of polyarylene sulfide resin powder granules, wherein the powder granular mixture has an average particle size in excess of 1 µm and 100 µm or less, an angle of repose of 43 degrees or less, a homogeneity of 4 or less.

2. A polyarylene sulfide resin powder granular mixture according to claim 1 wherein the fluororesin constituting the fluororesin powder granule is at least one member selected from polytetrafluoroethylene (PTFE), polychlorotrifluoroethylene (PCTFE), polyvinylidene fluoride (PVDF), polyvinyl fluoride (PVF), perfluoroalkoxyfluororesin (PFA), tetrafluoroethylene-hexafluoro propylene copolymer (FEP), ethylene-tetrafluoroethylene copolymer (ETFE), and ethylene-chlorotrifluoroethylene copolymer (ECTFE).

3. A polyarylene sulfide resin powder granular mixture according to claim 1 or 2 wherein the polyarylene sulfide resin powder granules have an average particle size in excess of 1 µm and 100 µm or less.

4. A polyarylene sulfide resin powder granular mixture according to any one of claims 1 to 3 wherein the fluororesin powder granules have an average particle size of at least 100 nm and 1 µm or less.

5. A polyarylene sulfide resin powder granular mixture according to any one of claims 1 to 4 further comprising at least 0.1 part by weight and 5 parts or less by weight of inorganic fine particles in relation to 100 parts by weight of the polyarylene sulfide resin powder granules.

6. A polyarylene sulfide resin powder granular mixture according to claim 5 wherein the inorganic fine particles have an average particle size of at least 20 nm and 500 nm or less.

7. A method for producing a three-dimensional molded article comprising the step of supplying the polyarylene sulfide resin powder granular mixture according to any one of claims 1 to 6 to a selective laser sintering (SLS) 3D printer.
